# EUROPEAN PATENT APPLICATION

(11) **EP 4 279 619 A1**
(43) Date of publication of application: **22.11.2023**
(21) Application number: 22174384.2
(22) Date of filing: 19.05.2022
(51) Int. Cl.: C22B 3/26, C01G 15/00, C22B 7/00, C22B 41/00, C22B 58/00

(54) **METHOD FOR THE SEPARATION OF INDIUM, GERMANIUM, AND/OR GALLIUM FROM IRON**

(71) Applicant: Helmholtz-Zentrum Dresden - Rossendorf e.V., 01328 Dresden (DE)
(72) Inventor: HELBIG, Toni, 01328 Dresden (DE); KELLY, Norman, 01328 Dresden (DE)
(74) Representative: Riechelmann & Carlsohn Patentanwälte PartG mbB

(57) **Abstract**

The invention relates to a method for the separation of at least one valuable element selected from the group consisting of indium, gallium, and germanium from iron. Here, it is provided that the method comprises the steps of:
(a) providing an aqueous, sulfate solution containing iron and at least one of the valuable elements;
(b) providing an amine solution, wherein the amine solution is a solution of an amine in an organic solvent;
(c) contacting the aqueous sulfate solution with the amine solution to obtain a mixture having an organic phase and an aqueous phase, wherein the organic phase extracts iron and the valuable element(s) remain in the aqueous phase; and
(d) separating the organic phase from the aqueous phase, wherein the organic phase is obtained as an organic, iron-containing solution and the aqueous phase is obtained as a valuable element-containing solution.

## Description

The invention relates to a method for the separation of indium (In), germanium (Ge), and/or gallium (Ga) from iron (Fe). Furthermore, it relates to a method that enables the enrichment of In, Ga, and/or Ge.

Indium, germanium, and gallium are valuable elements and their effective recovery is of great economic importance. Indium and germanium are mainly recovered from sphalerite as a by-product of zinc metallurgy. Gallium is mainly recovered from bauxite and thus, recovered as a by-product of the aluminum metallurgy. With common methods the selectivity for In, Ga and/or Ge often is insufficient in the presence of Fe(III) ions. Common methods are precipitation processes (e.g., with sodium hydroxide, ammonia solution, or sodium tripolyphosphate [1] [2]), and extraction processes (e.g., by means of solvent extraction [3], [4]). Only the reduction to Fe(II) ions enables a certain selectivity.

In addition, due to exploiting new resources, for example tailings, slags, waste water, or end-of-life products, as well as employing alternative and sustainable biotechnological methods, the problem of separating Fe ions and In, Ge, or Ga ions becomes an important challenge. New and promising biotechnological methods for the recovery of In, Ge, and/or Ga use siderophores [5] or peptides [6] which have only a low selectivity over iron ions (especially over Fe(III)). For example, bioleaching needs the presence of iron ions to mobilize valuable elements, consequently Fe(III) is present together with In, Ge, and Ga in the pregnant leach solutions. One approach to process such solutions depends on the reduction of iron into the divalent state and subsequently uses a combination of solvent extraction processes to recover indium [7].

However, the methods known so far are associated with losses of the valuable elements, e.g., in precipitates of the iron precipitation. Recovery of the valuable elements from low concentrated solutions is only of low profitability. However, there are only limited options of selective enrichment of the valuable elements. Moreover, there is no selective regulation of the iron concentration in bioleaching solutions containing valuable elements.

The need to develop and optimize the recovery methods for In, Ge, Ga is elucidated by a substance flow analysis published in 2015. This shows that in 2011 only 1.4% of gallium, 0.7% of germanium, and 54% of indium of the amounts theoretically available in processed ores have been recovered. Here, the efficiency of the recovery methods was 46% (Ga), 56% (Ge), and 78% (In) [8].

So far, solvent extraction processes using amines for the extraction of iron from sulfate solutions [9], [10], [11] or from chloride solutions [12] have been proposed. The application of amine reagents for the separation of iron and one or more of the valuable elements (In, Ga, and/or Ge) has not been described so far.

It is the object of the invention to eliminate the drawbacks according to the prior art. In particular, there is provided a method for the separation of In, Ga, and/or Ge from iron that is associated with lower losses of In, Ga, and/or Ge in the separation of iron. Furthermore, there is provided a method that enables enrichment of In, Ga, and/or Ge.

Said problem is solved by the features of claims 1 and 15. Suitable developments of the invention result from the features of the dependent claims.

According to the invention there is provided a method for the separation of at least one of the valuable elements selected from the group consisting of indium, gallium, and germanium from iron, wherein the method comprises the steps of:
(a) providing an aqueous, sulfate solution containing iron and at least one of the valuable elements;
(b) providing an amine solution, wherein the amine solution is a solution of an amine in an organic solvent;
(c) contacting the aqueous, sulfate solution with the amine solution to obtain a mixture having an organic phase and an aqueous phase, wherein the organic phase extracts iron and the valuable element(s) remain in the aqueous phase; and
(d) separating the organic phase from the aqueous phase, wherein the organic phase is obtained as an organic, iron-containing solution and the aqueous phase is obtained as a valuable element-containing solution.

Said method in the following is also referred to as the first method according to the invention.

The first method according to the invention enables recovery of a valuable element-containing solution in step (d). The valuable element-containing solution is an aqueous solution. The valuable element-containing solution can contain one or more of the valuable elements, depending on which valuable elements are present in the aqueous, sulfate solution provided in step (a).

Step (a) provides an aqueous, sulfate solution containing iron and at least one of the valuable elements. The aqueous, sulfate solution can be a pregnant leach solution obtained from a leaching process. In leaching processes, the valuable element(s) are to be leached out from a raw material containing the valuable element(s). The raw material typically contains iron so that the aqueous, sulfate solution obtained in leaching not only contains one or more of the valuable elements, but also iron. The raw material may be for example an ore, a slag, a waste water, or a technical product. The raw material may be tailings from a mine dump. A technical product may for example be an electronic device or an electronic component. The technical product may be an end-of-life product.

The aqueous, sulfate solution provided in step (a), that contains iron and at least one of the valuable elements, in addition to iron and the valuable element(s) can contain one or more further metallic elements. The further metallic element(s) in the following are referred to as "other target elements", because they can be contained in the aqueous, sulfate solution provided in step (a) in addition to the valuable element(s). The other target element(s) are present in the aqueous, sulfate solution provided in step (a) as ions. Preferably, each of the other target elements is selected from the group consisting of zinc, copper, and aluminum. The other target element(s) may be those from the particular raw materials that were subjected to a leaching process in order to prepare the solution provided in step (a). However, it may be provided that the aqueous, sulfate solution contains no other target element except of iron and the valuable element(s).

It may be provided that the aqueous, sulfate solution provided in step (a) has a pH value in a range of 0 to 2.5, preferably in a range of 0.5 to 1.5. For example, the pH value in the aqueous, sulfate solution provided in step (a) can be adjusted by the concentration of sulfuric acid. Iron, the valuable element(s) and, if present, the other target element(s) are present in the aqueous, sulfate solution provided in step (a) as ions.

Iron contained in the aqueous, sulfate solution can be present therein as trivalent iron. Preferably, the aqueous, sulfate solution contains trivalent iron only. To this end it may be provided that the first method according to the invention comprises oxidation of divalent iron to trivalent iron. For example, it may be provided that step (a) comprises oxidation of divalent iron, that is present in the aqueous, sulfate solution, to trivalent iron. In this way in step (a) an aqueous, sulfate solution can be obtained that contains no divalent iron, but only trivalent iron. For example, oxidation can be performed by contacting the divalent iron with an oxidant such as air, oxygen, or hydrogen peroxide. For that, it may be provided to introduce the oxidant into the aqueous, sulfate solution provided in step (a).

In step (b) an amine solution is provided. The amine solution is a solution of an amine in an organic solvent. Preferably, the amine is a secondary amine of the general formula R¹-NH-R², wherein R¹ and R² each independently are a C₄-C₁₆ alkyl group or an aryl group. It may be provided that R¹ and R² each independently are a C₄-C₁₆ alkyl group. Alternatively, it may be provided that R¹ and R² each independently are an aryl group. A preferred example of a secondary amine is di(tridecyl)amine (DTDA). The organic solvent in which the amine is dissolved preferably has no or only low water solubility. In this way, obtaining a mixture which has an organic phase and an aqueous phase in step (c) shall be facilitated. Particularly preferred, the organic solvent has low solubility in water and the highest possible solubility for the amine. In one embodiment of the invention the organic solvent is selected from the group consisting of one or more hydrocarbons, one or more chlorinated hydrocarbons and a mixture thereof. The hydrocarbon(s) may be selected from the group consisting of aliphatic, aromatic, alicyclic hydrocarbons, and mixtures thereof. An example of a chlorinated hydrocarbon is trichloromethane. Preferably, the organic solvent is a non-polar solvent. More preferably, the organic solvent is selected from the group consisting of one or more branched or unbranched C₆-C₁₇ alkanes, a middle distillate from refining crude oil, and mixtures thereof. Preferably, the C₈-C₁₄ alkane(s) is/are selected from the group consisting of *n-*octane, *n*-decane, *n*-dodecane, *n*-tetradecane and the like. A preferred example of a middle distillate is kerosene. Preferably, the organic solvent is kerosene. The kerosene may be a kerosene with an aromatic content of < 20 wt%. More preferably, the aromatic content in the kerosene is < 2 wt%. Particularly preferred, the amine solution is a solution of di(tridecyl)amine in kerosene with < 2 wt% aromatic content. It may be provided that the amine solution contains no further components except from the amine and the organic solvent. It may be provided that the organic solvent contains one or more modifiers, however this is not required. Thus, it may be provided that the amine solution consists of the amine and the organic solvent.

In particular, the term "C₄-C₁₆ alkyl" refers to a saturated, aliphatic hydrocarbon group with a branched or unbranched carbon chain having 4 to 16 carbon atoms and preferably 8 to 16 carbon atoms and particularly preferred 10 to 14 carbon atoms. Examples of C₄-C₁₆ alkyl groups comprise, but are not limited to isobutyl, *sec*-butyl, *tert-*butyl, pentyl, *n*-hexyl, heptyl, octyl, nonyl, decyl, undecyl, dodecyl, tridecyl and the alike. The C₄-C₁₆ alkyl group may optionally be substituted with one or more substituents, wherein each substituent independently is hydroxy, alkyl, alkoxy, aryl, halogen, haloalkyl, nitro, cyano, amino, monoalkylamino, or dialkylamino, unless stated otherwise.

In particular, the term "alkyl", unless stated otherwise, refers to a saturated aliphatic hydrocarbon group with a branched or unbranched carbon chain having 1 to 12 carbon atoms, preferably 1 to 8 carbon atoms and particularly preferred 1 to 6 carbon atoms. Examples of alkyl groups comprise, but are not limited to methyl, ethyl, propyl, isopropyl, isobutyl, *sec*-butyl, tert-butyl, pentyl, *n*-hexyl, heptyl, octyl, nonyl, decyl, undecyl, dodecyl, and the like. The alkyl group may optionally be substituted with one or more substituents, wherein each substituent independently is hydroxy, alkyl, alkoxy, halogen, haloalkyl, nitro, cyano, amino, monoalkylamino, or dialkylamino, unless stated otherwise.

In particular, the term "alkoxy", unless stated otherwise, refers to a group of formula -OR, wherein R is an alkyl group, as defined herein. Examples of alkoxy components comprise, but are not limited to methoxy, ethoxy, isopropoxy, and the like. The alkoxy group may optionally be substituted with one or more substituents, wherein each substituent independently is hydroxy, alkyl, alkoxy, halogen, haloalkyl, nitro, cyano, amino, monoalkylamino, or dialkylamino, unless stated otherwise.

The term "aryl", unless stated otherwise, refers to a cyclic, aromatic hydrocarbon group consisting of a mono, bi, or tricyclic aromatic ring system having 5 to 18 ring atoms, preferably 5 or 6 ring atoms. The aryl group may optionally be a substituted aryl group. Examples of aryl groups comprise, but are not limited to phenyl, naphthyl, anthracenyl, naphthalenyl, phenanthryl, fluorenyl, indenyl, pentalenyl, azulenyl, oxydi-phenyl, biphenyl, methylenediphenyl, aminodiphenyl, diphenylsulfidyl, diphen-ylsulfonyl, diphenylisopropylidenyl, benzodioxanyl, benzofuranyl, benzodioxylyl, benzopyranyl, benzoxazinyl, benzoxazinonyl, benzopiperadinyl, benzopiperazinyl, benzopyrrolidinyl, benzomorpholinyl, methylenedioxyphenyl, ethylenedioxyphenyl, and the like, including partially hydrogenated derivatives thereof. A preferred example is phenyl. In particular, the term "substituted aryl group" refers to an aryl group optionally independently substituted with one to four substituents, preferably one or two substituents selected from hydroxy, alkyl, alkoxy, aryl, halogen, haloalkyl, cyano, nitro, amino, monoalkylamino, or dialkylamino, -COR (wherein R is hydrogen, alkyl, phenyl, or phenylalkyl), -(CR'R")ₙ-COOR (wherein n is an integer from 0 to 5, R' and R" independently are hydrogen or alkyl, and R is hydrogen, alkyl, cycloalkyl, cycloalkylalkyl, phenyl, or phenylalkyl) or -(CR'R")ₙ-CONR^{a'}R^{b'} (wherein n is an integer from 0 to 5, R' and R" independently are hydrogen or alkyl and R^{a'} and R^{b'} independently are hydrogen, alkyl, cycloalkyl, cycloalkylalkyl, phenyl, or phenylalkyl).

The term "halogen", unless stated otherwise, refers to fluorine, chlorine, bromine, or iodine.

The concentration of the amine in the amine solution is preferably in a range of 0.1 mol/L to 0.5 mol/L, particularly in a range of 0.2 mol/L to 0.4 mol/L, each based on the volume of the amine solution.

In step (c) the aqueous, sulfate solution is contacted with the amine solution. Here, a mixture is obtained that has an organic phase and an aqueous phase. The organic phase extracts iron, while the valuable elements remain in the aqueous phase. Contacting may comprise blending of the aqueous, sulfate solution with the amine solution. Preferably, the aqueous, sulfate solution and the amine solution are mixed with each other. The amount of substance of amine is preferably present in excess with respect to the amount of substance of iron contained in the solution provided in step (a). It may be provided that the ratio of amounts of substances of the amine to Fe(III) is between 3:1 and 1:1, wherein a ratio of amounts of substances between 2.5:1 and 2.0:1 is preferred.

In step (d) the organic phase is separated from the aqueous phase. Here, the organic phase is obtained as an organic, iron-containing solution and the aqueous phase is obtained as a valuable element-containing solution. The valuable element-containing solution is an iron-depleted solution. Thus, the valuable elements that were contained in the aqueous, sulfate solution provided in step (a) are separated from iron that was contained in the aqueous, sulfate solution provided in step (a). It may be provided that the valuable element-containing solution obtained in step (d) has a pH value in a range of 0.5 to 2.0.

Steps (c) and (d) enable to extract the iron from the aqueous, sulfate solution provided in step (a). The solvent extraction method enables separation of iron from aqueous, sulfate solutions containing In, Ge, and/or Ga. Here, the iron is extracted into an organic phase using amines. Due to the high selectivity of the iron extraction In, Ge, and/or Ga are not extracted into the organic phase and thus, remain in the aqueous phase (step (c)). The basic principle of the selective iron extraction from aqueous sulfate solutions by amines may also be transferred to other hydrometallurgical processes, such as ion exchange (using a resin functionalized with amine groups) or a membrane separation process (e.g. using a supported liquid membrane). Following step (d) a combination of re-extraction, which is also referred to as stripping, and precipitation may be provided (see step (e)) to remove iron from the organic iron-containing solution obtained in step (d) by forming a sparingly soluble iron compound which therefore precipitates as a solid. It may be provided that subsequently the stripped organic solution is provided as an amine solution in step (b) and is used for further iron extraction in steps (c) and (d). The stripped organic solution contains the amine.

Thus, the first method according to the invention can comprise the step of:
(e) separating iron from the organic, iron-containing solution by contacting the organic, iron-containing solution with an aqueous stripping solution to recover the organic solvent.

The organic solvent recovered in step (e) can be reused in step (b). This enables circulation of the organic solvent. The organic solvent recovered in step (e) contains the amine.

The stripping solution may be an alkaline inorganic solution or an inorganic acid, wherein an alkaline inorganic solution is preferred. An example of an alkaline solution is sodium hydroxide solution.

After having separated iron, a valuable element-containing, iron-depleted aqueous solution is left in step (d) that is also referred to as raffinate. The concentration of the valuable element(s) in the valuable element-containing solution obtained in step (d) increases with each repetition of steps (a) to (d) when using the valuable element-containing solution obtained in step (d) to prepare the aqueous, sulfate solution provided in step (a) (see step (g) explained below). At the latest in the first repetition of the cycle the concentration of the valuable element(s) in the valuable element-containing solution obtained in step (d) is greater than in the aqueous, sulfate solution provided in step (a). Preferably, this is already the case when first carrying out step (f).

As already explained, the aqueous, sulfate solution provided in step (a) can contain at least one other target element. Preferably, each of the other target elements is selected from the group consisting of zinc, copper, and aluminum. The other target element(s) in step (c) together with the valuable element(s) remain in the aqueous phase. Thus, the other target element(s) in step (d) are contained in the valuable element-containing solution.

It may be provided that the first method according to the invention further comprises the step of
(f) separating the other target element(s) from the valuable element-containing solution obtained in step (d) that contains the other target element(s), to obtain a valuable element-containing concentrate.

The raffinate obtained in step (d) in addition to the other target element(s) may also contain residual iron that has remained in the aqueous phase during step (c). Preferably, said iron is separated together with the other target element(s) in step (f). Separation of the other target element(s) and, if present, of the iron preferably takes place completely. Separation in step (f) can be carried out by e.g., solvent extraction (SX), ion exchange (IX), precipitation, or a membrane separation process.

The term "concentrate" refers to the fact that the concentration of the valuable element(s) in the valuable element-containing solution obtained in step (f) increases either with each repetition of steps (a) to (d) and (f) or with each repetition of steps (a) to (f) when using the concentrate obtained in step (f) for the preparation of the aqueous, sulfate solution provided in step (a) (see step (g) explained below). In the first repetition of the cycle the concentration of the valuable element(s) in the concentrate obtained in step (f) is greater than in the aqueous, sulfate solution provided in step (a) at the latest. Preferably, this is already the case when first carrying out step (f). The concentration of the valuable element(s) in the raffinate can correspond to the concentration of the valuable element(s) in the concentrate. However, this is not mandatory.

It may be provided that the valuable element-containing concentrate is obtained as a phase other than an aqueous phase. For example, the concentrate in a solvent extraction process (SX) may be obtained as an organic phase, in an ion exchange process (IX) as a loaded resin and in a precipitation process as a precipitation product.

In step (f) in addition to the valuable element-containing concentrate another process stream can be obtained, which may be an aqueous or an organic solution or a precipitate that contains the other target element(s) and, if present, iron. Said process stream may be used, for example for further processing in a process known per se. Such a process may be for example a process for the recovery of one or more other target element(s) contained in the solution.

The first method according to the invention can comprise the step of:
(g) using the valuable element-containing solution obtained in step (d) or a part thereof or the valuable element-containing concentrate obtained in step (f) or a part thereof for the preparation of the aqueous, sulfate solution provided in step (a).

In step (g) the valuable element-containing solution obtained in step (d) or a part thereof is used for the preparation of the aqueous, sulfate solution provided in step (a). Here, the valuable element-containing solution or a part thereof directly or by adding sulfuric acid can immediately be used as an aqueous, sulfate solution in step (a).

However, if it is provided to use the concentrate obtained in step (f) or a part thereof for the preparation of the aqueous, sulfate solution provided in step (a), so it may be provided that the valuable element(s) is/are transferred from the concentrate into an aqueous solution, for example under the application of sulfuric acid or a diluted sulfuric acid. Sulfuric acid can be or already has been added to the aqueous solution to prepare the aqueous, sulfate solution provided in step (a). Such a transfer particularly may be provided if the concentrate is obtained as an organic phase, as a loaded resin, or as a precipitation product.

In these cases an aqueous, sulfuric acid solution can be obtained in step (g) that contains the valuable element(s). Subsequently, the aqueous, sulfuric acid solution can be contacted with a raw material containing at least one of the valuable elements. Said raw material may be the raw material from which the aqueous, sulfate solution provided in step (a) has been produced originally.

The aqueous, sulfuric acid solution obtained in step (g) contains the valuable element(s), but no iron or only a minor residue of the iron content in the initial aqueous, sulfate solution, which was provided in step (a). Recirculating a certain amount of iron in the aqueous sulphuric acid solution may be beneficial for the leaching process. The oxidizing effect of Fe(III) can promote the leaching procedure. The addition of iron in bioleaching processes may be reduced or replaced. When the aqueous, sulphuric acid solution is used for leaching of the raw material, not only the valuable element(s) and, if present in the raw material, the other target element(s), but also iron is dissolved in the leaching solution. Thus, the aqueous, sulphate solution is obtained that is provided in step (a) and can be processed in a further cycle.

Steps (a) to (d) and (g) as well as optionally steps (e) and/or (f) can form one cycle that is repeated once or several times. Here, with each repetition the concentration of the valuable element(s) in the valuable element-containing solution obtained in step (d) increases. In this way, enrichment of the valuable element(s) is achieved. This is explained by the fact that leaching of the raw material containing the valuable element(s) is carried out with a solution already containing the valuable element(s). Thus, a recirculation of the valuable element(s) may be provided in which the concentration of the valuable element(s) increases with each repetition of the cycle because in each step (a) an aqueous, sulphate solution is provided that has a higher concentration of the valuable element(s) and thus, in step (d) a valuable element-containing solution is obtained that also has a higher concentration of the valuable element(s). In this way, enrichment of the valuable elements in the entire process can be achieved.

In case of a recirculation of the valuable element(s) it may be provided to divide the valuable element-containing solution obtained in step (d) or the valuable element-containing concentrate obtained in step (f) into a first and second part. The first part can be used to carry out step (g). The second part can be used to recover the valuable element(s). Thus, a bleed stream enriched with valuable elements may be provided. Subsequently, the bleed stream enriched with valuable elements can be used to recover the valuable elements.

In case of a recirculation of the valuable element(s) it may be provided to split the aqueous, sulphuric acid solution obtained in step (g) into a first and a second part. The first part can be used to prepare the aqueous, sulphate solution provided in step (a). The second part can be used to recover the valuable element(s). Thus, a bleed stream enriched with valuable elements may be provided. Subsequently, the bleed stream enriched with valuable elements can be used to recover the valuable elements.

The first method according to the invention is a hydrometallurgical method. It may be applied to remove iron from In, Ga, and/or Ge-containing sulphate solutions. Here, separation of the impurity iron(III) that is highly concentrated in the process solution can be achieved.

By means of the first method according to the invention, losses of valuable elements, i.e. In, Ga, and/or Ge, that, according to the prior art, are associated with the iron separation, can be reduced. The method can be realized using solvent extraction. The basic principle of the selective iron extraction from aqueous sulfate solutions by amines may also be transferred to other hydrometallurgical processes, such as ion exchange (using a resin functionalized with amine groups) or a membrane separation process (e.g. using a supported liquid membrane). Profitability of the recovery of the valuable element(s) from raw materials with low concentrations of the valuable element(s) can be increased by means of the first method according to the invention.

The first method according to the invention requires no reduction of Fe(III) to Fe(II) and high concentration ratios of Fe(III) : (In, Ga and/or Ge) in aqueous sulphate solutions can be significantly decreased. Thus, the recovery of the low-concentrated valuable elements can be improved. Thereby, profitability of the subsequent In, Ga, and/or Ge-recovery can be improved.

The first method according to the invention enables a selective regulation of the iron concentration in aqueous, sulphate solutions. The concentration of iron needed in bio-hydrometallurgical processes can be regulated selectively over the valuable elements by applying the first method according to the invention. Moreover, the first method according to the invention can enable the formation of a compact residue by a precipitation stripping of iron avoiding high-volume waste streams or waste waters, respectively.

The use of amines as an extracting agent for the selective separation of iron from In, Ga, and/or Ge enables enrichment of In, Ga, and/or Ge from low-concentrated aqueous solutions, e.g. bioleaching solutions, by recirculation.

Thus, according to the invention there may be provided a method for enrichment of at least one valuable element selected from the group consisting of indium, gallium, and germanium, wherein the method comprises the steps of:
(a) providing an aqueous, sulphate solution containing iron and at least one of the valuable elements;
(b) providing an amine solution, wherein the amine solution is a solution of an amine in an organic solvent;
(c) contacting the aqueous, sulphate solution with the amine solution to obtain a mixture having an organic phase and an aqueous phase, wherein the organic phase extracts iron and the valuable element(s) remain in the aqueous phase;
(d) separating the organic phase from the aqueous phase, wherein the organic phase is obtained as an organic, iron-containing solution and the aqueous phase is obtained as a valuable element-containing solution;
(g) using the valuable element-containing solution obtained in step (d) or a part thereof for the preparation of the aqueous, sulphate solution provided in step (a).

In the following, said method is also referred to as second method according to the invention. The second method according to the invention uses the first method according to the invention for the separation of iron from the aqueous, sulphate solution provided in step (a).

In step (g) the valuable element-containing solution obtained in step (d) or a part thereof is used in step (a). For that, sulphuric acid can be added to the valuable element-containing solution obtained in step (d), as is already described in context with the first method according to the invention.

Steps (a) to (d) and (g) as well as optionally step (e) can form a cycle that is repeated once or several times, as is already described in context with the first method according to the invention. Here, the concentration of the valuable element(s) in the valuable element-containing solution obtained in step (d) increases with each repetition. In this way, enrichment of the valuable element(s) is achieved.

If the aqueous, sulphate solution provided in step (a) in addition to iron and the valuable element(s) contains one or more other target elements, so the second method according to the invention can also comprise step (f). The second method according to the invention in this embodiment comprises the steps of:
(a) providing an aqueous, sulphate solution containing iron, at least one of the valuable elements, and at least one other target element selected from the group consisting of zinc, copper, and aluminum;
(b) providing an amine solution, wherein the amine solution is a solution of an amine in an organic solvent;
(c) contacting the aqueous, sulphate solution with the amine solution to obtain a mixture having an organic phase and an aqueous phase, wherein the organic phase extracts iron and the valuable element(s) as well as the other target element(s) remain in the aqueous phase;
(d) separating the organic phase from the aqueous phase, wherein the organic phase is obtained as an organic, iron-containing solution and the aqueous phase is obtained as a valuable element-containing solution containing also the other target other target element(s);
(f) separating the other target element(s) from the valuable element-containing solution obtained in step (d) to obtain a valuable element-containing concentrate; and
(g) using the concentrate obtained in step (f) or a part thereof for the preparation of the aqueous, sulphate solution provided in step (a).

The aqueous, sulphate solution provided in step (a) in this embodiment is obtained from the concentrate or a part thereof. For that, the valuable element-containing solution obtained in step (d) that contains the other target element(s) is used in step (f) for the preparation of the concentrate. The valuable element-containing solution obtained in step (d) that contains the other target element(s) may also be referred to as raffinate. In step (f) the other target element(s) are separated from the valuable element-containing solution, whereby the concentrate is obtained.

In step (g), if necessary, the valuable element(s) are transferred from the concentrate into an aqueous solution containing the valuable element(s), as is already described in context with the first method according to the invention. For that, sulphuric acid or diluted sulphuric acid can be applied to the concentrate, as is already described in context with the first method according to the invention.

Steps (a) to (d) as well as (f) and (g) as well as optionally step (e) can form a cycle that is repeated once or several times as is already described in context with the first method according to the invention. Here, the concentration of the valuable element(s) in the concentrate obtained in step (f) increases with each repetition. In this way, enrichment of the valuable element(s) is achieved.

The second method according to the invention can comprise further features that are already described in context with the first method according to the invention. In particular, the second method according to the invention can comprise one or more of the steps which have already been explained in context with the first method according to the invention. This includes, for example, step (e). Steps (a) to (g) have already been explained in context with the first method according to the invention. Reference is made to this explanation.

The first and second methods according to the invention enable an improvement of the recovery rate and efficiency of the recovery of the valuable element(s). Losses of In, Ga, and/or Ge are less compared with the prior art. After selective extraction iron leaves the process as a solid iron residue, wherein the residue contains the valuable element(s) only in low amounts, compared with the conventional iron precipitation methods, or not at all. Enrichment of In, Ga, and/or Ge can be achieved by recirculation. This achieves a significant improvement of the profitability of a subsequent recovery of In, Ga, and/or Ge. The first and second methods according to the invention can be applied in particular for the recovery of so far unused amounts of In, Ga, and/or Ge from iron-containing tailings. Said iron-containing tailings may be a raw material which can be used for the preparation of the aqueous, sulphate solution provided in step (a) by leaching.

The first and second methods according to the invention enable a selective separation of iron and the valuable element(s) In, Ga and/or Ge by using an organic amine compound as an extracting agent. Said compound is selected such that a high iron extraction is achieved, good phase separation is possible even without the use of additional organic compounds besides the solvent and that co-extraction of the valuable element(s) is avoided. The invention enables removal of iron as a sparingly soluble iron compound by direct precipitation of the iron from the organic solution obtained in step (d) without losing the extracting agent into the iron residue. This enables recycling of the organic phase for further extraction of iron.

In the following the invention is explained in detail with the help of examples and drawings, without intending to limit the invention to these examples. Here,
- Fig. 1: shows a schematic flow chart of one embodiment of the first method according to the invention;
- Fig. 2: shows a schematic flow chart of one embodiment of the second method according to the invention;
- Fig. 3: shows a graph depicting the dependency of the extraction of iron and the extraction of valuable elements on the pH value;
- Fig. 4: shows graphs with extraction isotherms of iron at different amine concentrations in the organic phase (Fig. 4A) and with the indium-coextraction depending on the iron loading in the organic phase (Fig. 4B);
- Fig. 5: shows FTIR spectra of the iron-loaded organic phase obtained in step (c) before and after precipitation stripping with NaOH; and

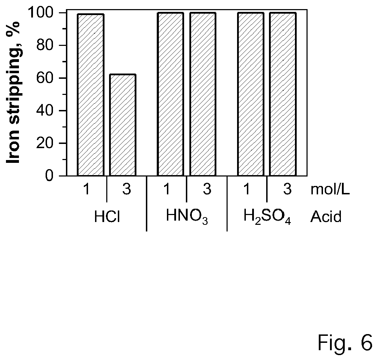

- Fig. 6: shows a bar chart depicting the stripping efficiency of iron using different acids.

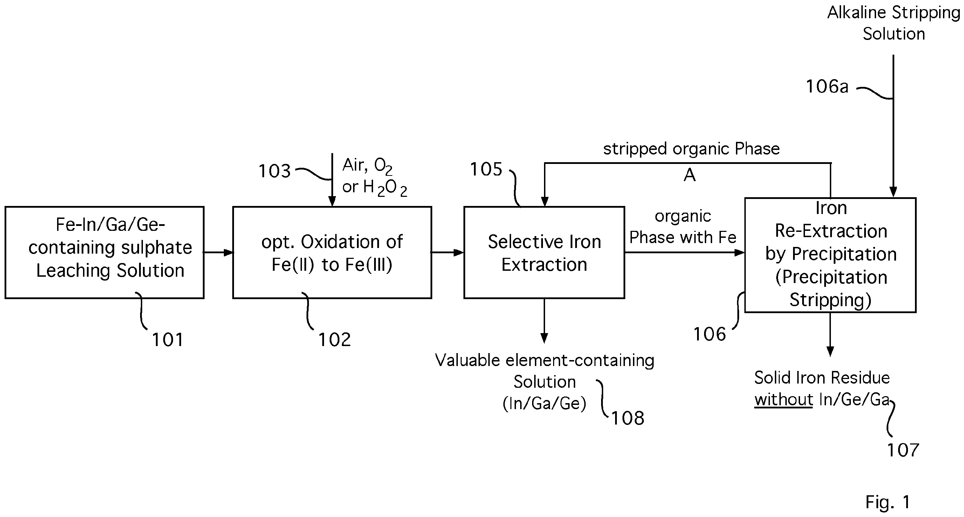

The flow chart of an embodiment of the first method according to the invention shown in Fig. 1 illustrates the separation of iron from a solution that in addition to iron contains one or more valuable elements. In step (a) an aqueous, sulphate solution is provided (101) that contains iron and at least one of the valuable elements. If the aqueous, sulphate solution contains Fe(II), oxidation of Fe(II) to Fe(III) is provided (102). Otherwise, oxidation is not required. For the oxidation of Fe(II) to Fe(III) an oxidant, for example air, oxygen, or hydrogen peroxide, is introduced (103) into the aqueous, sulphate solution.

In the next step separation (105) of Fe(III) from the aqueous, sulphate solution takes place. This step in Fig. 1 is referred to as selective iron extraction. For the separation of Fe(III) the aqueous, sulphate solution is contacted with an amine solution (step (c)), whereby a mixture having an organic phase and an aqueous phase is obtained. As a result, the organic phase extracts iron, while the valuable element(s) remain in the aqueous phase. The amine solution provided therefore (step (b)) is the stripped organic phase that is obtained in the iron stripping (106). The amine solution is recycled.

In the next step (step (d)) the mixture is separated by separating its organic phase from its aqueous phase. The organic phase is obtained as an organic, iron-containing solution, the aqueous phase is obtained as a valuable element-containing solution. The organic, iron-containing solution is subjected to an iron stripping by precipitation (106, step (e)) using an alkaline stripping solution (106a). The removal of iron from a loaded organic phase by precipitation is also referred to as precipitation stripping. Here, a solid is obtained (107) as residue which contains iron but no valuable element or only very low amounts of a valuable element. By precipitating the iron, the organic solvent of the amine solution and the amine itself are recovered. The organic solvent and the amine are the amine solution that is used again for the selective iron extraction (arrow A). The aqueous valuable element-containing solution (108) that is obtained in the selective iron extraction (105) is an iron-depleted raffinate. It contains no iron or at most a low residual concentration of iron.

The first method according to the invention can not only be used for the separation of iron but also for the enrichment of the valuable element(s). For example, said enrichment can take place by means of the second method according to the invention. Selective iron extraction is essential to prevent enrichment of iron.

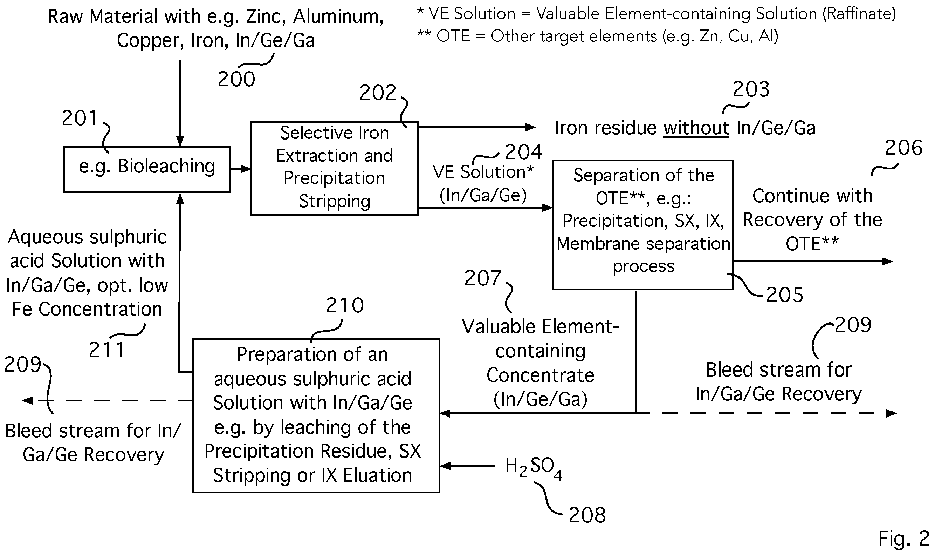

The flow chart of one embodiment of the second method according to the invention shown in Fig. 2 illustrates the enrichment of one or more valuable element(s) in a process solution. The second method according to the invention starts with an aqueous, sulphate solution containing iron, at least one of the valuable elements, and at least one of the other target elements zinc, aluminum, and/or copper (step (a)), 201). For example, said aqueous, sulphate solution is prepared by bioleaching of a raw material (200).

If required, the aqueous, sulphate solution is subjected to oxidation, as described in context with the first method according to the invention. Now, the aqueous, sulphate solution containing Fe(III), at least one of the valuable element(s), and at least one of the other target elements is subjected to selective iron extraction and the precipitation stripping (202), as has already been described in context with the first method according to the invention. The other target element(s) together with the valuable element(s) remain in the aqueous phase. In this way, an aqueous valuable element-containing solution (iron-depleted raffinate, 204), which also contains the other target element(s), and a residue (203), which contains iron but no valuable element or only very low amounts of a valuable element, are obtained.

The iron-depleted raffinate (204) is an aqueous solution containing the valuable element(s) and the other target element(s). It contains no iron or at most a low residual concentration of iron. In the next step (step (f)) the other target element(s), i.e. zinc, aluminum, and/or copper, and, if present, iron, which remained in the raffinate, are separated from the raffinate to obtain a valuable element-containing concentrate (207). For the separation of the other target element(s) (205) a method can be used that is selected from the group comprising solvent extraction, ion exchange, precipitation, and membrane separation processes. The separated other target element(s) can be transferred to further processes for the recovery of the other target element(s) (206). The valuable element-containing concentrate contains the valuable element(s), no iron or a residual concentration of iron as low as possible and no other target element or a residual concentration of the other target element as low as possible.

Now, the valuable element-containing concentrate or a part thereof (207), if required by adding sulphuric acid (208), is transferred into an aqueous, sulphuric acid solution (210) which contains at least one of the valuable elements. The concentration of iron is as low as possible. In order to achieve enrichment of the valuable element(s) the aqueous, sulphuric acid solution (211) is applied for leaching (201) of the raw material (200). Here, the valuable element(s) and the other target element(s) as well as iron are leached from the raw material and thus are transferred into the aqueous, sulphuric acid solution. In this way, again an aqueous, sulphate solution containing iron, at least one of the valuable element(s), and the other target element(s) is obtained. However, said aqueous, sulphate solution contains a higher concentration of at least one valuable element than the solution which was provided in the first cycle of the method. Now, from said aqueous, sulphate solution iron can be separated again (steps (c) and (d)), for what an amine solution is added to the aqueous, sulphate solution (step (b)). If a further repetition of the circulation shall be provided, steps (f) and (g) are carried out again.

Part of the concentrate (207) or the aqueous sulphuric acid solution (211) can be removed as a bleed stream or batchwise to recover the valuable element(s) (209).

### Example 1

A model solution was provided which contained 7.3 g/L of Fe(III), 20.4 g/L of Zn(II), 2.1 g/L Cu(II), 2.0 g/L of Al(III), 26 mg/L of In(III), 20 mg/L of Ge(IV), and 26 mg/L of Ga(III). In, Ge and Ga are the valuable elements, Zn, Cu and Al are the other target elements. Sulphuric acid was added to the model solution to adjust the pH value, thereby obtaining the aqueous, sulphate solution provided in step (a). As the amine solution a solution of 0.4 mol/L of di(tridecyl)amine (DTDA) in kerosene was provided (step (b)).

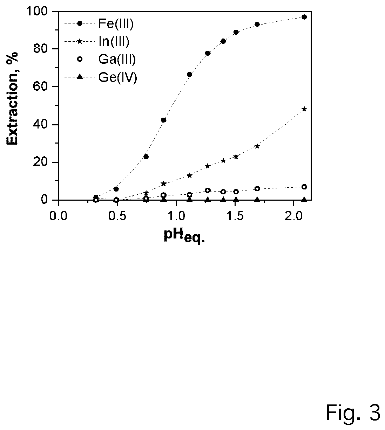

The amine solution was mixed with the model solution (pH value adjusted using sulphuric acid) to extract Fe(III) (step (c)). Fig. 3 shows the results of the extraction. The diagram shows that germanium was not extracted in the range of from 0.3 < pH < 2.1. A small co-extraction of gallium (ca. 7% at pH 2.1) is observed. At pH values > 0.5 coextraction of indium increases but it is significantly lower than the extraction of iron. The other target elements zinc, copper, and aluminum are not extracted and therefore showed the same pH curve as germanium.

### Example 2

The method described in example 1 was repeated with the same model solution at different equilibrium pH values (1.1 or 1.7) and with different concentrations of aliphatic amine in the amine solution (0.2 or 0.4 mol/L of DTDA in kerosene). The composition of the model solution was determined prior to extraction and after extraction of Fe(III) (steps (c) and (d)). Table 1 shows that separation of iron is achieved with the organic phase, while the valuable elements and other target elements remain in the aqueous phase. The higher pH value as well as the higher amine concentration improve iron extraction while also the coextraction of indium is slightly increased.

**Table 1**

| DTDA Concentration | pH_{eq} | Fe(III), g/L | Zn(II), g/L | Al(III), g/L | Cu(II), g/L | In(III), mg/L | Ga(III), mg/L | Ge(IV), mg/L |
|---|---|---|---|---|---|---|---|---|
| Model Solution | | 7.3 | 20.4 | 2.0 | 2.1 | 26 | 26 | 20 |
| 0.2 mol/L | 1.1 | 3.5 | 20.7 | 2.1 | 2.1 | 23 | 26 | 21 |
| 0.2 mol/L | 1.7 | 1.6 | 20.6 | 2.0 | 2.1 | 21 | 25 | 21 |
| 0.4 mol/L | 1.1 | 2.5 | 21.0 | 2.1 | 2.1 | 22 | 26 | 21 |
| 0.4 mol/L | 1.7 | 0.5 | 21.0 | 2.1 | 2.1 | 18 | 25 | 21 |

### Example 3

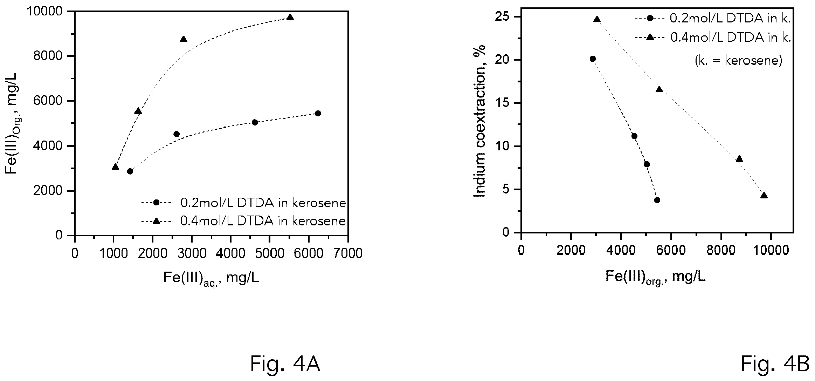

The effect of the iron loading of an amine solution on the co-extraction of valuable elements and other target elements was investigated. Extraction isotherms have been determined using the aqueous model solution described in example 1 and adjusting phase ratios in the range of 0.5 < A:O < 6.1. The term "A:O" refers to the volume ratio of the aqueous phase (A) to the organic phase (O). The isotherms of the iron extraction in Fig. 4A show that iron loading of ca. 5.4 g/L and 9.7 g/L can be achieved with amine concentrations of 0.2 mol/L and 0.4 mol/L, respectively. The iron loading refers to the organic phase obtained in step (c). Fig. 4B explains that with increasing iron loading of the organic phase the co-extraction of indium is decreased to <5%. Extraction of Ga, Ge, Zn, Al, and Cu was <4%. The equilibrium pH value after the extraction was in the range of 1.2 to 1.3.

### Example 4

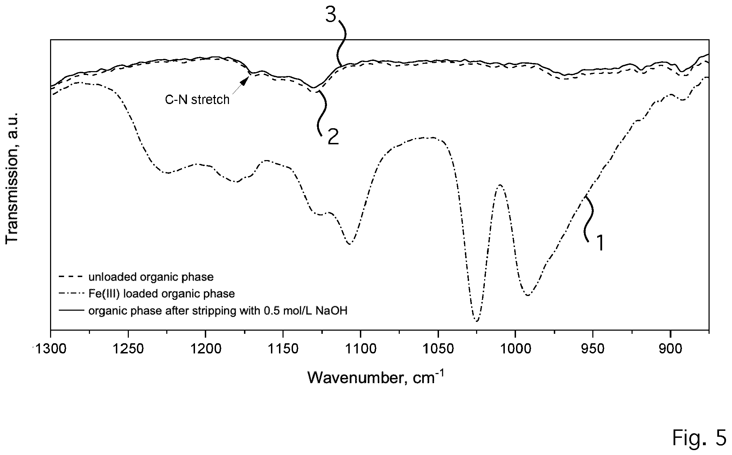

The iron-loaded organic phase (0.2 mol/L of DTDA in kerosene, loading: 5.3 g/L) was investigated before and after precipitation stripping of iron using Fourier-transform infrared spectroscopy (FTIR). The FTIR spectra are shown in Fig. 5. The loaded organic phase (1) shows distinct bands in the range between 970 and 1030 cm⁻¹ which indicate the loading with an iron sulfate complex. Said bands disappear after stripping with 0.5 mol/L NaOH solution (see (3) in Fig. 5). The comparison between the FTIR spectrum of the unloaded organic phase (2) and the FTIR spectrum of the stripped organic phase (3) shows that the C-N band at ca. 1170 cm⁻¹ is also present in the stripped organic phase and thus, the amine which serves as the extracting agent in step (b) is not removed from the organic phase during precipitation stripping. Under these conditions the aqueous solution had a pH value of ca. 13, resulting in the formation of a sparingly soluble iron compound.

### Example 5

Stripping of iron from the organic, iron-containing solution obtained in step (d) was investigated using different acids. Loading of the organic, iron-containing solution was 5.1 g/L of Fe(III) in 0.2 mol/L of DTDA in kerosene. With both sulfuric acid (1 mol/L and 3 mol/L of H₂SO₄) and nitric acid (1 mol/L and 3 mol/L of HNO₃) complete stripping of iron from the organic phase was possible. Using hydrochloric acid complete stripping was possible at a concentration of 1 mol/L of HCl. When using a 3 mol/L HCl solution an iron stripping of 62% was achieved. However, during stripping with H₂SO₄ a third phase was formed. Furthermore, stripping using an acid can require a subsequent conditioning step of the organic solution to prevent carry-over of the acid anions into the extraction step.

### Literature

[1] Jibo Jiang, Duoqiang Liang, Qingdong Zhong, Precipitation of indium using sodium tripolyphosphate, Hydrometallurgy 165-169, Vol. 106, 2011, DOI: 10.1016/j.hydromet.2010.12.009.
[2] Saeid Bayat, Sajjad Aghazadeh, Mohammad Noaparast, Mahdi Gharabaghi, Behrooz Taheri, Germanium separation and purification by leaching and precipitation, J. Cent. South Univ., 2214-2222, Vol. 23, 2016, DOI: 10.1007/s1 1771-016-3279-6
[3] M.C.B. Fortes, J. S. Benedetto, Separation of Indium and Iron by Solvent Extraction, Minerals Engineering, 447-451, Vol. 11, 1998
[4] D.D. Harbuck, Gallium and Germanium Recovery from Domestic Sources, Report 9419, US Bureau of Mines, 1992
[5] Rohan Jain, Siyuan Fan, Peter Kaden, Satoru Tsushima, Harald Foerstendorf, Robert Barthen, Falk Lehmann, Katrin Pollmann, Recovery of gallium from wafer fabrication industry wastewaters by Desferrioxamine B and E using reversedphase chromatography approach, Water Research 203-212, Vol. 158, 2019, https://doi.org/10.1016/j.watres.2019.04.005.
[6] Dissertation Nora Schöneberger, Identification and characterization of galliumbinding peptides, TU Bergakademie Freiberg, 2020
[7] Martin Bertau, Peter Frohlich, Radek Vostal, Verfahren zur Abtrennung von Indium aus metallhaltigen, wässerigen Lösungen, Patent DE 10 2017 107 097 A1
[8] Christina Licht, Laura Talens Peiró, and Gara Villalba, Global Substance Flow Analysis of Gallium, Germanium, and Indium, Journal of Industrial Ecology, 890-903, Vol. 19, 2015, DOI:10.1111/jiec.12287
[9] Mingyu Li, Zhimei He, Li Zhou, Removal of iron from industrial grade aluminum sulfate by primary amine extraction system, Hydrometallurgy, 170-174, Vol. 106, 2011, DOI:10.1016/j.hydromet.2010.12.018
[10] Harold L. Feller, Method of Removing Iron from Aluminum Sulfate Solutions, US 3331662, 1967
[11] Wei Qifeng, Ren Xiulian, Guo jingjing, Chen Yongxing, Recovery and separation of sulfuric acid and iron from dilute acidic sulfate effluent and waste sulfuric acid by solvent extraction and stripping, Journal of Hazardous Materials, 1-9, Vol. 304, 2016
[12] Rohm & Haas, Removal of ferric chloride from iron-aluminum chloride solutions, GB 933233A, 1959

## Claims

1. A method for the separation of at least one valuable element selected from the group consisting of indium, gallium, and germanium from iron, wherein the method comprises the steps of:
(a) providing an aqueous, sulfate solution containing iron and at least one of the valuable elements;
(b) providing an amine solution, wherein the amine solution is a solution of an amine in an organic solvent;
(c) contacting the aqueous sulfate solution with the amine solution to obtain a mixture having an organic phase and an aqueous phase, wherein the organic phase extracts iron and the valuable element(s) remain in the aqueous phase; and
(d) separating the organic phase from the aqueous phase, wherein the organic phase is obtained as an organic, iron-containing solution and the aqueous phase is obtained as a valuable element-containing solution.

2. The method according to claim 1, **characterized in that** in step (a) the iron is present as trivalent iron in the aqueous, sulfate solution.

3. The method according to claim 1 or claim 2, **characterized in that** step (a) comprises oxidation of divalent iron to trivalent iron.

4. The method according to any of the preceding claims, **characterized in that** the solution provided in step (a) has a pH value of 0 to 2.5.

5. The method according to any of the preceding claims, **characterized in that** the amine is a secondary amine of general formula R¹-NH-R², wherein R¹ and R² each independently are a C₄-C₁₆ alkyl group or an aryl group.

6. The method according to any of the preceding claims, **characterized in that** the organic solvent of the amine solution is kerosene.

7. The method according to any of the preceding claims, **characterized in that** it further comprises the step of:
(e) separating iron from the organic, iron-containing solution by contacting the organic, iron-containing solution with an aqueous stripping solution to recover the organic solvent.

8. The method according to claim 7, **characterized in that** the stripping solution is an alkaline solution.

9. The method according to claim 7 or claim 8, **characterized in that** separated iron is obtained as a solid in step (e).

10. The method according to any of claims 7 to 9, **characterized in that** the organic solvent is reused in step (b).

11. The method according to any of the preceding claims, **characterized in that** the aqueous, sulfate solution provided in step (a) can contain at least one further element referred to as other target element, wherein the other target element is selected from the group consisting of zinc, copper, and aluminum and remains in the aqueous phase in step (c).

12. The method according to claim 11, **characterized in that** it further comprises the step of:
(f) separating the other target element(s) from the valuable element-containing solution obtained in step (d) which contains the other target element(s) to obtain a valuable element-containing concentrate.

13. The method according to claim 12, **characterized in that** separation of the other target element(s) takes place by means of a separation method selected from the group comprising solvent extraction, ion exchange, precipitation, and membrane separation processes.

14. The method according to any of the preceding claims, **characterized in that** it further comprises the step of:
(g) using the valuable element-containing solution obtained in step (d) or a part thereof or the valuable element-containing concentrate obtained in step (f) or a part thereof for the preparation of the aqueous, sulfate solution provided in step (a).

15. A method for the enrichment of at least one valuable element selected from the group consisting of indium, gallium, and germanium, wherein the method comprises the steps of:
(a) providing an aqueous, sulfate solution containing iron and at least one of the valuable elements;
(b) providing an amine solution, wherein the amine solution is a solution of an amine in an organic solvent;
(c) contacting the aqueous, sulfate solution with the amine solution to obtain a mixture having an organic phase and an aqueous phase, wherein the organic phase extracts iron and the valuable element(s) remain in the aqueous phase;
(d) separating the organic phase from the aqueous phase, wherein the organic phase is obtained as an organic, iron-containing solution and the aqueous phase is obtained as a valuable element-containing solution; and
(g) using the valuable element-containing solution obtained in step (d) or a part thereof for the preparation of the aqueous, sulfate solution provided in step (a).
